# EUROPÄISCHE PATENTSCHRIFT

(11) **EP 0 693 649 B1**
(45) Veröffentlichungstag und Bekanntmachung des Hinweises auf die Patenterteilung: **14.10.1998**
(21) Anmeldenummer: 94202137.9
(22) Anmeldetag: 20.07.1994
(51) Int. Cl.: F16L 3/12, F16L 3/133, F16L 55/033

(54) **Verfahren und Rohrschellenanordnung zum schwingungs-dämpfenden Befestigen einer liegenden Rohrleitung an einer Tragwand**
Method and pipe-clip arrangement for vibration-damping mounting of a horizontal pipe to a wall
Méthode et bride arrangement pour le montage anti-vibration d'un tuyau horizontal à une paroi

(43) Veröffentlichungstag der Anmeldung: 24.01.1996
(73) Patentinhaber: J. van Walraven B.V., NL-3641 RK Mijdrecht (NL)
(72) Erfinder: Van Walraven, Jan, NL-3641 GP Mijdrecht (NL)
(74) Vertreter: Boelsma, Gerben Harm, Ir.

(56) Entgegenhaltungen:
- EP-A- 0 582 354
- DE-A- 4 228 961

## Beschreibung

Die Erfindung bezieht sich auf ein Verfahren, wie definiert im ersten Teil des Anspruchs 1.

Ein derartiges Verfahren ist bekannt und wird angewandt in Fällen, in denen die Übertragung von Schwingungen von der Leitung über die Rohrschelle zur tragenden Wand vermieden werden soll und wobei es erwünscht ist, dass sich die Leitung bei Wärme-Dehnungen in Bezug auf die Befestigungsstellen verschieben kann. Indem an einer bestimmten Befestigungsstelle ein sogenannter "Festpunkt" gebildet wird, werden sich etwaige Wärme-Dehnungen ab diesem Punkt in entgegengesetzten Richtungen kontrolliert auswirken können und z.B. in Expansions-Hilfsstücken ausgeglichen werden können. Ein Beispiel einer bei einem derartigen Verfahren verwendbaren, aus mit Flanschen zusammenziehbaren Hälften bestehenden Rohrschelle zeigt die EP-A-0387966. Indem zwischen den Flanschen ein Distanzring angeordnet wird, wird bewirkt, dass die Schellen mit dazu gehörigen Einlagen die Leitung verhältnismässig locker umfassen und die Leitung sich also leicht verschieben kann, während die schwingungs-dämpfende Wirkung der ungespannten Einlagen vollständig zur Geltung kommt.

Ein Festpunkt an einer bestimmten Befestigungsstelle kann in bekannter und einfachster Weise dadurch erhalten werden, dass man die Leitung an dieser Stelle unverschiebbar festspannt, z.B. indem an dieser Stelle das für eine verschiebbare Lagerung erforderliche Distanzstück weggelassen wird. Beim verschiebungsfreien Festspannen der Leitung wird jedoch die Einlage zusammengepresst und ihre schwingungs-dämpfende Wirkung weitgehend verlieren.

In der Praxis is daher eine besondere Rohrschellenanordnung entwickelt und bekannt geworden, womit Leitungen an bestimmten Stellen unverschieblich, sondern möglichst schwingungsfrei an einer tragenden Wand befestigt werden können. Bei dieser Anordnung handelt es sich um eine Rohrschelle, die ohne schwingungs-dämpfende Einlage auf der Leitung gespannt wird und die über einen in einer Richtung senkrecht zur Längsachse der Leitung wirksamen Schwingungsdämpfer an einer Wandkonsole befestigt wird (siehe z.B. die Ausführungsform nach Fig. 5 in der EP-A-0508085).

Rohrschellenanordnungen dieser Art sind jedoch aufwendig und komplizieren die Installationsarbeit.

Die Erfindung beabsichtigt nunmehr eine einfache und wirksame Lösung für das obige Problem zu schaffen.

Erfindungsgemäss wird dieser Zweck mit den im zweiten Teil des Anspruchs 1 genannten Merkmalen erreicht.

Durch das erfindungsgemässe Verfahren kann eine liegende Leitung in der üblichen Weise mittels mit einer schwingungs-dämpfenden Einlage versehener Rohrschellen verschiebbar aufgehängt werden und kann an einer erwünschten Stelle ein "Festpunkt" dadurch gebildet werden, dass an jener Stelle zwei zusätzliche, ebenfalls mit einer Einlage versehene Rohrschellen der gleichen Art je an einer Seite der die Leitung tragenden Rohrschelle angebracht werden, wobei die beiden zusätzlichen Rohrschellen verschiebungsfrei auf der Leitung festgespannt werden.

Zu bemerken ist, dass in der EP-A-0582354 und der DE-A-4228981 ein Verfahren zum Aufhängen einer Leitung an einer Wand offenbart ist, wobei eine senkrechte Leitung von einer mit einer schwingungs-dämpfenden Einlage versehenen und über eine Gewindestange an der Wand befestigten Rohrschelle locker umfasst wird und wobei eine zweite, lose von der Wand liegenden, ebenfalls mit einer schwingung-dämpfenden Einlage versehene Rohrschelle verschiebungsfrei auf der Leitung festgespannt wird und eine Art von Stützkragen bildet, mit dem die Leitung schwingungs-dämpfend auf dem oberen Stirnwand der erstgenannten Schelle aufliegt.

Die Erfindung bezieht sich ebenfalls auf eine Rohrschellenanordnung, wie definiert im ersten Teil des Anspruchs 2, welche Rohrschellenanordnung die im zweiten teil des Anspruchs 2 genannten Merkmale aufweist.

Die Erfindung wird unten an Hand der Zeichnung mit einem Ausführungsbeispiel näher erläutert. Es zeigen:
Fig. 1 eine Perspektivansicht eines Teiles einer liegenden Leitung an der Stelle eines erfindungsgemäss gebildeten festen Aufhängepunkt und
Fig. 2 einen Längsschnitt durch den Leitungsteil in Fig. 1.

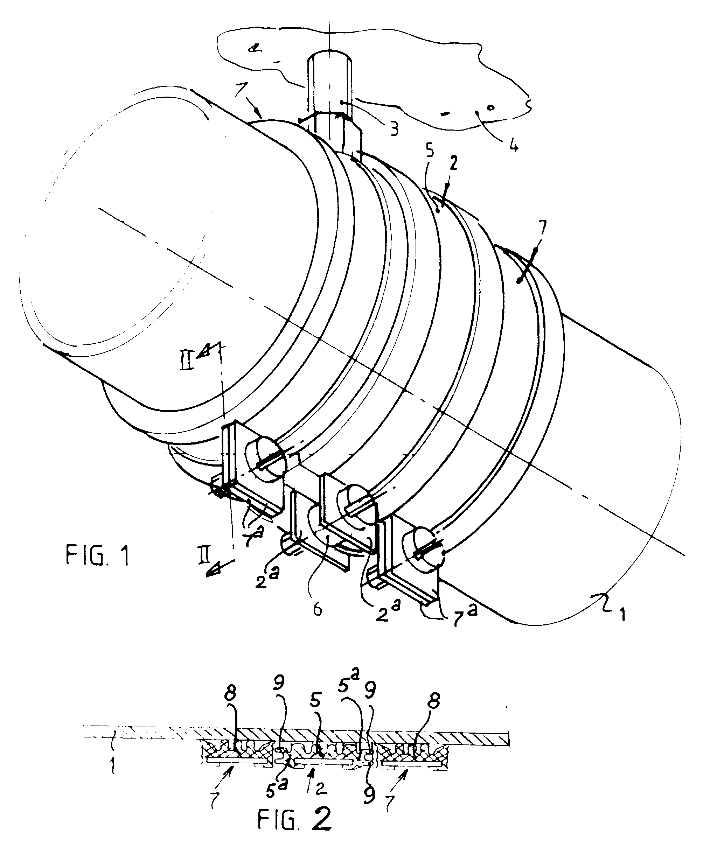

In Fig. 1 ist mit 1 ein Teil einer liegenden Leitung bezeichnet, welche mit Hilfe einer bekannten Rohrschelle 2 und einer von dieser ausragenden Gewindestange 3 an einer tragenden Wand 4 aufgehängt ist. Die Rohrschelle 2 ist mit einer Einlage 5 aus schwingungs-dämpfendem Material, wie Gummi oder dergl., versehen, welche in bekannter Weise um die Stirnränder der Schelle 2 greift (siehe Fig. 2). Die Schelle 2 sitzt locker um die Leitung 1. Dieser lockere Sitz der Leitung 1 innerhalb der Schelle 2 ist einer optimal dämpfenden Wirkung der Einlage 5 förderlich und wird von einem zwischen den Flanschen 2a der Schelle 2 angeordneten Distanzring 6 sichergestellt. Durch diesen lockeren Sitz kann die Leitung im Prinzip innerhalb der Einlage 5 verschieben, z.B. bei Wärme-Dehnungen. In der gezeigten Ausführung wird eine Verschiebung jedoch verhindert, indem an beiden Seiten der zentral liegenden Rohrschelle 2 Hilfs-Rohrschellen 7 auf der Leitung festgeklemmt sind, zwischen denen die Schelle 2 eingeschlossen liegt. Die Hilfs-Rohrschellen 7 können von gleichem Typ und Mass wie die Rohrschelle 2 sein, wobei jedoch zwischen ihren Flanschen 7a ein Distanzring fehlt, sodass die Leitung unverschieblich in den Schellen 7 gehalten wird und der gezeichnete Aufhängepunkt zu einem Festpunkt gebildet ist, ab welchen sich etwaige Wärme-Dehnungen in entgegengesetzten Richtungen aufwirken können und zum Beispiel von Expansions-Hilfsstücken ausgeglichen werden können.

In der gezeigten Ausführung bilden die aufstehenden, um die Stirnränder der Schellenkörper greifenden Randteile 5a der Einlage 5 und der Einlagen 8 der Hilfs-Rohrschellen 7 eine schwingungs-dämpfende Barriere zwischen den drei nebeneinander um die Leitung 1 sitzenden Schellenkörpern 7, 7. Die dämpfende Wirkung dieser Barriere wird noch verstärkt durch die mit 9 bezeichneten Vorsprünge, welche sich in achsialer Richtung der Einlage 5 der zentralen Rohrschelle 2 erstrecken. Ähnliche Vorsprünge können bei den Einlagen 8 der Hilfs-Rohrschellen 2 vorgesehen sein oder es können gesonderte schwingungs-dämpfende Ringe oder derartige Elemente verwendet werden.

## Patentansprüche

1. Verfahren zum schwingungs-dämpfenden Befestigen einer liegenden Leitung (1) an einer Tragwand (4), wobei die Leitung (1) an den Befestigungsstellen verschiebbar in mit einer schwingungs-dämpfenden Einlage (5) versehene Rohrschellen (2) eingelegt wird und wobei an einer Befestigungsstelle ein Festpunkt gebildet wird, dadurch gekennzeichnet, dass der Festpunkt realisiert wird, indem an beiden Seiten der an der Festpunktstelle befindlichen Rohrschelle (2) eine ähnliche Rohrschelle (7), mit einem Zwischenelement aus schwingungs-dämpfendem Material axial gegen die erstgenannte Rohrschelle (2) anliegend, verschiebungsfrei auf der Leitung festgeklemmt wird.

2. Rohrschellenanordnung, bestehend uas einer an einer tragenden Wand (4) befestigten, mit einer schwingungs-dämpfenden Einlage (5) versehenen Rohrschelle (2) und einer verschiebbar von dieser umfassten liegenden Leitung (1), dadurch gekennzeichnet, dass an beiden Seiten der Rohrschelle (2) eine ähnliche Rohrschelle (7), mit einem Zwischenelement aus schwingungs-dämpfenden Material axial gegen die erstgenannten Rohrschelle (2) anliegend, verschiebungsfrei auf der liegenden Leitung (1) festgeklemmt sitzt.

3. Anordnung nach Anspruch 2, dadurch gekennzeichnet, dass das schwingungs-dämpfenden Zwischenelement mit den Einlagen (8) der Rohrschellen (7) aus einem Stück gebildet wird.

## Claims

1. A method fastening a horizontal pipe (1) to a wall (4) in a vibration absorbing manner, wherein the pipe (1) is surrounded by a vibration absorbing liner (5) of a pipe clip (2) at the fastening locations, and wherein at one fastening location a fixed point is formed, characterised in that the fixed point is obtained by providing, on either side of the pipe clip (2) at said fixed point location, a similar pipe clip (7) with an intermediary means of vibration absorbing material in axial contact with said first pipe clip (2), said similar pipe clip being fixedly clamped around the pipe.

2. A pipe clip assembly, comprising a pipe clip (2) fastened to a wall (4) and provided with a vibration absorbing liner (5), as well as a pipe (1) slidingly surrounded by said pipe clip, characterised in that on either side of said pipe clip (2) a similar pipe clip (7) is provided with an intermediary means of vibration absorbing material in axial contact with said first pipe clip (2), said similar clip being fixedly clamped around said pipe (1).

3. An assembly according to claim 2, characterised in that said vibration absorbing intermediary means is integrally formed with the liners (8) of said pipe clips (7).

## Revendications

1. Procédé pour fixer, d'une manière amortissant les vibrations, une conduite horizontale (1) à une paroi de support (4), la conduite (1) étant insérée, de manière à être déplaçable au niveau des emplacements de fixation, dans des colliers de serrage (2) pourvus d'un insert (5) amortissant les vibrations, et dans lequel un point fixe est formé au niveau d'un emplacement de fixation, caractérisé en ce que le point fixe est formé par le fait que des deux côtés du collier de serrage (7) situé au niveau de l'emplacement du point fixe on bloque par serrage un collier de serrage similaire (7) au moyen d'un élément intermédiaire formé d'un matériau amortissant les vibrations, de sorte qu'il est libre de se déplacer axialement sur la conduite, en étant bloqué contre le collier de serrage (7) indiqué en premier lieu.

2. Dispositif à colliers de serrage, constitué par un collier de serrage (7) qui est fixé à une paroi de support (4) et comporte un insert (5) qui amortit les vibrations, et une conduite horizontale (1) qui est enserrée par le collier de serrage avec possibilité de déplacement, caractérisé en ce que des deux côtés du collier de serrage (7), un collier de serrage similaire (7) est monté en étant fermement bloqué, avec un élément intermédiaire formé d'un matériau amortissant les vibrations, en étant libre de se déplacer sur la conduite (1), tout en s'appliquant axialement contre le collier de serrage (7) indiqué en premier lieu.

3. Dispositif selon la revendication 2, caractérisé en ce que l'élément intermédiaire amortissant les vibrations est formé d'un seul tenant avec les inserts (5) des colliers de serrage (7).
